# EUROPÄISCHE PATENTSCHRIFT

(11) **EP 4 107 486 B1**
(45) Veröffentlichungstag und Bekanntmachung des Hinweises auf die Patenterteilung: **06.03.2024**
(21) Anmeldenummer: 21703358.8
(22) Anmeldetag: 19.01.2021
(51) Int. Cl.: G01D 5/14, E05B 81/66, E05B 81/68, E05B 17/22

(54) **KRAFTFAHRZEUG-SCHLIESSEINRICHTUNG**
MOTOR VEHICLE CLOSING DEVICE
DISPOSITIF DE FERMETURE DE VÉHICULE AUTOMOBILE

(30) Priorität: 19.02.2020 DE 102020104297
(43) Veröffentlichungstag der Anmeldung: 28.12.2022
(73) Patentinhaber: Kiekert AG, 42579 Heiligenhaus (DE)
(72) Erfinder: WEICHSEL, Ulrich, 47249 Duisburg (DE)
(86) Internationale Anmeldenummer: PCT/DE2021/100057
(87) Internationale Veröffentlichungsnummer: WO 2021/164806

(56) Entgegenhaltungen:
- DE-A1- 10 065 100
- DE-A1-102012 203 225
- DE-A1-102014 016 749

## Beschreibung

Die Erfindung betrifft eine Kraftfahrzeug-Schließeinrichtung, mit wenigstens einem Schließelement, beispielsweise einer Drehfalle und/oder Sperrklinke als Bestandteile eines Kraftfahrzeug-Schlosses, und mit zumindest einer Bewegungen des Schließelementes erfassenden Sensoreinheit.

Die exakte Bestimmung der Bewegung von Schließelementen und insbesondere die Einnahme bestimmter und vorgegebener Positionen ist von besonderer Bedeutung im Zusammenhang mit insbesondere Kraftfahrzeug-Schlössern, zu denen nicht nur Kraftfahrzeug-Seitentürschlösser, sondern auch Kraftfahrzeug-Heckklappenschlösser, Kraftfahrzeug-Fronthaubenschlösser aber auch Kraftfahrzeug-Schlösser an Sitzen, Tankklappen, Ladeklappen etc. gehören. Tatsächlich hängt beispielsweise die Funktion eines Zuziehantriebes davon ab, dass eine Drehfalle als Schließelement ihre Vorrastposition eingenommen hat. Darüber hinaus ist die Funktion des Zuziehantriebes daran gekoppelt, dass die Drehfalle nach einem Zuziehvorgang die Hauptrastposition sicher erreicht bzw. erreicht hat.

Neben solchen Komfortfunktionen sind aber auch insbesondere Sicherheitsfunktionen an die einwandfreie Positionsabfrage gekoppelt. So korrespondiert die Einnahme der Hauptrastposition seitens der Drehfalle nicht nur zur Einnahme von Funktionsstellungen wie beispielsweise "verriegelt", "diebstahlgesichert" oder auch "kindergesichert", sondern wird hieran beispielsweise auch die Funktion von Airbags oder Gurtrückhalteeinrichtungen gekoppelt. Das heißt, der sicheren Positionsabfrage des betreffenden Schließelementes kommt bei Kraftfahrzeug-Schließeinrichtungen eine zunehmende und überragende Bedeutung im Hinblick auf bestehende Komfort- und Sicherheitsanforderungen zu.

Neben im Stand der Technik an dieser Stelle eingesetzten Schaltern und insbesondere Mikroschalter zur Positionsabfrage kommen seit längerem auch Hallsensoren zum Einsatz, wie sie bereits in der WO 99/49159 A1 beschrieben werden. Tatsächlich sind an dieser Stelle ein Drehfallensensor und ein Klinkensensor einerseits zur Positionserfassung der Drehfalle und andererseits zur Positionserfassung der Sperrklinke realisiert.

Außerdem ist eine Steuerlogik vorgesehen, mit deren Hilfe die von beiden Sensoren kommenden einzelnen Signale gemeinsam ausgewertet werden können. Beispielsweise wird die Offenlage einer zugehörigen Kraftfahrzeugtür daran geknüpft, dass beide Sensoren nicht ansprechen. Selbstverständlich sind auch andere kombinatorische Auswertungen möglich. Als Sensoren kommen auf mitbewegte Permanentmagnete ansprechende Hallsensoren zum Einsatz.

Der weitere und ebenfalls einschlägige sowie gattungsbildende Stand der Technik nach der DE 196 43 947 A1 arbeitet ebenfalls mit einem Hallsensor. Tatsächlich geht es vorliegend um eine Verschlusseinrichtung für eine Kraftfahrzeugtür mit Kraftfahrzeug-Türschloss und zugeordnetem Schlosshalter. In diesem Fall ist die Drehfalle aus ferromagnetischem Werkstoff hergestellt. Außerdem steuert die Drehfalle zumindest einen Hallsensor-Chip mit elektronischer Schaltfunktion und entsprechenden Leiterausgängen. Der Hallsensor-Chip kann dazu in einem Schlosshaltersteg angeordnet sein.

Aus der DE 100 65 100 A1 ist ein Kraftfahrzeugschloss mit Schließelementen bekannt, nämlich einer Schlossfalle zur Erfassung eines Schließkeils und einer Sperrklinke zum Festhalten der Schlossfalle in einer Hauptschließstellung und vorzugsweise auch in einer der Hauptschließstellung vorgelagerten Vorschließstellung, mit einem Beeinflussungsmagneten und mit einem berührungslos betätigbaren, durch das Magnetfeld des Beeinflussungsmagneten beeinflussbaren Sensor zur Erfassung der Hauptschließstellung der Schlossfalle, wobei der Sensor ortsfest am Gehäuse des Kraftfahrzeugschlosses angeordnet ist und bei Erreichen der Hauptschließstellung der Schlossfalle von einem Magnetfeld mit einer einen Grenzwert überschreitenden Indikatorfeldstärke beeinflusst wird. Die Konstruktion wird hier dadurch besonders einfach, dass die Schlossfalle und der Sperrklinke der Beeinflussungsmagnet so zugeordnet und der Sensor so angeordnet ist, dass das den Sensor beeinflussende Magnetfeld des Beeinflussungsmagneten nur bei in Hauptschließstellung befindlicher Schlossfalle und in die Schlossfalle eingefallener Sperrklinke die Indikatorfeldstärke erreicht oder überschreitet.

Der Stand der Technik hat sich grundsätzlich bewährt, wenn es darum geht, einzelne punktuelle Positionen von Kraftfahrzeug-Schließelementen abzufragen, beispielsweise das Erreichen der Vorrastposition oder auch Hauptrastposition seitens der Drehfalle. Wie insbesondere der Stand der Technik nach der WO 99/49159 A1 deutlich macht, werden dazu bisher mehrere Sensoreinheiten eingesetzt, beispielsweise der dort beschriebene Drehfallensensor und zusätzlich der Klinken- bzw. Sperrklinkensensor. Das ist aufwendig. Hinzu kommt, dass eine erhöhte Anzahl an Sensoren und deren Überwachung von einem Steuergerät inklusive Signalauswertung fehlerträchtig ist bzw. indifferente Funktionszustände auftreten können. Das führt dann im Extremfall zu Fehlermeldungen, die im Endeffekt zusätzlich durch Verschmutzungen aber auch Toleranzen bei der Fertigung der jeweiligen Schließelemente verursacht werden. Hier will die Erfindung insgesamt Abhilfe schaffen.

Der Erfindung liegt das technische Problem zugrunde, eine derartige Kraftfahrzeug-Schließeinrichtung so weiterzuentwickeln, dass der technologische Aufwand bei zugleich gleichbleibender oder sogar noch gesteigerter Informationsdichte verringert ist.

Zur Lösung dieser technischen Problemstellung ist eine gattungsgemäße Kraftfahrzeug-Schließeinrichtung im Rahmen der Erfindung dadurch gekennzeichnet, dass die Sensoreinheit zur dreidimensionalen Erfassung der Bewegungen des Schließelementes eingerichtet ist.

Erfindungsgemäß kommt folglich eine spezielle Sensoreinheit zum Einsatz, nämlich eine solche, mit deren Hilfe nicht nur eine bisher praktisch punktuelle Erfassung der Bewegung des betreffenden Schließelementes möglich ist, sondern welche die fragliche Bewegung des Schließelementes im Detektionsbereich der Sensoreinheit räumlich erfasst. Als Folge hiervon kann ein Signale der Sensoreinheit auswertendes Steuergerät nicht nur Aussagen treffen im Sinne von "Drehfalle in Vorrast" oder "Drehfalle in Hauptrast", sondern kann beispielsweise der gesamte Weg der Drehfalle von der Vorrast in die Hauptrast überwacht werden.

Dadurch lässt sich dieser gemessene Weg der Drehfalle im Beispielfall nicht nur überwachen, sondern beispielsweise von dem Steuergerät mit darin hinterlegten Sollwerten oder auch Schwellwerten vergleichen und ihre Einhaltung feststellen. Dadurch können nunmehr problemlos Aussagen dergestalt getroffen werden, ob im betrachteten Beispielfall die Drehfalle vollständig von Ihrer Vorrastposition in die Hauptrastposition mithilfe eines Zuziehantriebes überführt worden ist oder nicht. Sollte der fragliche und absolvierte Weg beispielsweise unterhalb eines im Steuergerät abgespeicherten Sollweges angesiedelt sein, deutet dies auf eine nicht vollständige Schließbewegung hin. Das wiederum könnte mit einer Fehlfunktion des Zuziehantriebes zusammenhängen, führt im Endeffekt jedenfalls dazu, dass die Drehfalle ihre Hauptrastposition nicht erreicht hat. Als Folge hiervon lässt sich beispielsweise eine zugehörige Kraftfahrzeugtür nicht verriegeln und können zugehörige Sicherheitseinrichtungen ihre Funktion nicht übernehmen, was durch entsprechende Anzeigen im Cockpit für einen Bediener transparent gemacht werden kann.

Es wird deutlich, dass durch den Rückgriff auf die speziell ausgelegte Sensoreinheit zur dreidimensionalen Erfassung der Bewegungen des Schließelementes die aus Signalen der fraglichen Sensoreinheit mithilfe des Steuergerätes ableitbare Informationsdichte im Vergleich zum Stand der Technik deutlich gestiegen ist. Denn neben der punktuellen Erfassung einzelner Positionen des betreffenden Schließelementes kann beispielsweise auch sein Betätigungsweg erfasst werden. Darüber hinaus lassen sich aus den Signalen der Sensoreinheit aber auch Geschwindigkeiten des betreffenden Schließelementes ableiten. Auch eine Beschleunigung des Schließelementes entlang seines Betätigungsweges kann auf diese Weise erfasst und ausgewertet werden. In Verbindung mit der zuvor bereits angesprochenen Einhaltung von Schwellwerten oder dem Vergleich mit Sollwerten stehen erfindungsgemäß eine bisher nicht dagewesene Fülle an Informationen zur Verfügung, die insbesondere i. V. m. Komfort- und Sicherheitsanforderungen die Funktionalität verbessern. Das gilt auch und insbesondere vor dem Hintergrund, dass die Anzahl der bisherigen Sensoren auf diese Weise verringert werden kann, sodass indifferente Funktionszustände praktisch nicht mehr auftreten. Schließlich ist es mithilfe der dreidimensional arbeitenden Sensoreinheit generell auch möglich, mehrere Schließelemente gleichzeitig hinsichtlich ihrer Bewegungen zu überwachen und die Bewegungen ggf. voneinander zu separieren. Hierin sind die wesentlichen Vorteile zu sehen.

Nach vorteilhafter Ausgestaltung arbeitet die Sensoreinheit berührungslos. Grundsätzlich kann die Sensoreinheit aber auch taktil arbeiten. In der Regel setzt sich die Sensoreinheit aus einem Tastelement und einem Sensor zusammen. Dabei kann das Tastelement an oder in dem Schließelement angebracht sein. Alternativ oder zusätzlich kann das Tastelement aber auch ganz oder teilweise mit dem Schließelement zusammenfallen.

Das Tastelement und der Sensor können optisch arbeiten. In diesem Fall kann es sich bei dem Tastelement um eine reflektierende Fläche mit Markierungen am Schließelement handeln, deren Position und Bewegung beispielsweise von einem Lichtstrahl als Bestandteil des Sensors abgetastet wird, welcher nach seiner Reflexion an dem Tastelement von einem zugehörigen Empfänger als weiterem Bestandteil des Sensors ausgewertet wird. Dabei ist in der Regel der Sensor zweiteilig mit einem lateralen Sensorelement und einem vertikalen Sensorelement ausgerüstet. Auf den konkreten Fall der optisch arbeitenden Sensoreinheit übertragen bedeutet dies, dass das lateral arbeitende Sensorelement Bewegungen des Tastelementes in seitlicher Richtung in Bezug zum lateralen Sensorelement erfasst. Demgegenüber ist das vertikale Sensorelement zur Erfassung von Bewegungen des Tastelementes in vertikaler Richtung im Vergleich zum Sensor eingerichtet. Auf den konkreten Fall des mit Markierungen ausgerüsteten und optisch abgetasteten Tastelementes übertragen bedeutet dies, dass beispielsweise Punkte oder Strukturen gleichsam optisch vergrößert oder verkleinert werden.

Im Regelfall arbeitet die Sensoreinheit jedoch berührungslos und magnetisch bzw. induktiv. In diesem Fall ist das Tastelement als zumindest ein Permanentmagnet ausgebildet, dessen dreidimensionale Bewegungen in diesem Fall von einem dreidimensional wirkenden Hallsensor als Sensor erfasst werden. Solche dreidimensional arbeiteten Hallsensoren verfügen erneut über ein laterales Sensorelement und ein vertikales Sensorelement. Da der fragliche Sensor in der Regel gegebenenfalls zusammen mit weiteren elektronischen Bauelementen auf einem Halbleiterchip angeordnet ist, korrespondiert das laterale Sensorelement dazu, dass die Messung einer vom Permanentmagneten als Tastelement erzeugten magnetischen Fluss respektive der magnetischen Flussdichte senkrecht zur Oberfläche des Halbleiterchips erfolgt. Demgegenüber ist das vertikale Sensorelement so eingerichtet, dass mit seiner Hilfe die fragliche magnetische Flussdichte des Permanentmagneten parallel zur Oberfläche des Halbleiterchips gemessen werden kann.

Da darüber hinaus regelmäßig mit mehreren Permanentmagneten und auch mehreren dreidimensional arbeitenden Hallsensoren gearbeitet wird, lässt sich insgesamt die Bewegung des auf diese Weise überwachten Schließelementes innerhalb des Detektionsbereiches der Sensoreinheit dreidimensional erfassen.

Eine ähnliche und vergleichbare Auslegung ist natürlich genauso gut für den Fall denkbar, dass die Sensoreinheit berührungslos und optisch arbeitet. In diesem Fall können erneut beispielsweise mehrere Tastelemente und auch mehrere dreidimensional arbeitende optische Sensoren realisiert werden. Jedenfalls kann hierdurch insgesamt wie bei der magnetisch arbeitenden Sensoreinheit die Bewegung des Schließelementes innerhalb des Detektionsbereiches der Sensoreinheit erfasst und können die Signale mithilfe des angeschlossenen Steuergerätes ausgewertet werden.

Im Hinblick auf dreidimensionale Hallsensoren und entsprechend aufgebaute Sensoreinheiten sei zur weiteren Detaillierung der Funktionsweise nur beispielhaft auf die DE 10 2012 203 225 A1 verwiesen, die sich mit einem Verfahren zum berührungslosen Messen einer relativen Position mithilfe eines 3-D-Hallsensors mit Messsignalspeicher beschäftigt.

Gegenstand der Erfindung ist auch ein Kraftfahrzeug-Schloss, welches mit einer Kraftfahrzeug-Schließeinrichtung des eingangs beschriebenen Aufbaus ausgerüstet ist. In jedem Fall sorgt die erfindungsgemäß zur dreidimensionalen Erfassung eingerichtete Sensoreinheit dafür, dass eine umfassende und intelligente Überwachung der Bewegungen des jeweiligen Schließelementes möglich wird. Dadurch, dass in der Regel sowohl das laterale Sensorelement als auch das vertikale Sensorelement gegebenenfalls zusammen mit weiteren elektronischen Bauelementen auf dem Halbleiterchip angeordnet sind, können darüber hinaus die Kosten gering gehalten werden. Tatsächlich sind solche HallSensoren meistens mit mehreren sowohl lateralen als auch vertikalen Sensorelementen ausgerüstet, die typischerweise punktsymmetrisch um einen Mittelpunkt angeordnet sind. Es besteht auch die Möglichkeit, mit mehreren einachsigen Hallsensoren zu arbeiten, um auf diese Weise unmittelbar alle drei Komponenten des Magnetfeldes zu messen, wie es der eine oder die mehreren Permanentmagneten an oder in dem Schließelement bei seiner Bewegung erzeugen.

Im Ergebnis kann mithilfe insbesondere der dreidimensional arbeitenden magnetischen Sensoreinheit jeweils ein dreidimensionaler Vektor der magnetischen Flussdichte und damit die dreidimensionale Position des Schließelementes zu jedem Zeitpunkt erfasst werden. Wenn man mehrere dieser Vektoren respektive entsprechende Endpunkte betrachtet, so lassen sich hieraus die gewünschten Rückschlüsse auf die Bewegung des Schließelementes ziehen, wobei die Bewegung durch zeitliches Differenzieren darüber hinaus Rückschlüsse auf die Geschwindigkeit des Schließelementes oder sogar dessen Beschleunigung zulässt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Figur 1A,1B**: die erfindungsgemäße Kraftfahrzeug-Schließeinrichtung beim Übergang von einer geöffneten Position (Fig. 1A) in eine Vorrastposition und gestrichelt angedeutete Hauptrastposition (Fig. 1B) und
- **Figur 2A,2B**: die Sensoreinheit im Detail (Fig. 2A) sowie ein ausgangsseitiges Signal schematisch (Fig. 2B).

In den Figuren ist eine Kraftfahrzeug-Schließeinrichtung dargestellt. Nach dem Ausführungsbeispiel und nicht einschränkend gehört die Kraftfahrzeug-Schließeinrichtung zu einem Kraftfahrzeug-Schloss und ist zu diesem Zweck mit wenigstens einem Schließelement 1, 2 ausgerüstet. Tatsächlich sind nach dem Ausführungsbeispiel zwei Schließelemente 1, 2 realisiert, nämlich eine Drehfalle 1 und eine Sperrklinke 2, die zusammengenommen ein Gesperre 1, 2 definieren, welches mit einem Schlosshalter 3 in bekannter Art und Weise bei einem Schließvorgang einer zugehörigen Kraftfahrzeug-Tür wechselwirkt. Dazu sind die beiden Schließelemente 1, 2 in bzw. an der betreffenden Kraftfahrzeug-Tür angeordnet, wohingegen sich der Schlosshalter 3 karosserieseitig findet.

Von besonderer Bedeutung ist noch eine erfindungsgemäß realisierte Sensoreinheit 4, 5 bzw. 4; 5a, 5b. Die Sensoreinheit 4, 5 ist nach dem Ausführungsbeispiel und erfindungsgemäß zur dreidimensionalen Erfassung der Bewegungen des Schließelementes 1, 2 eingerichtet. Anhand des Ausführungsbeispiels erkennt man, dass vorliegend die Sensoreinheit 4, 5 sowohl Bewegungen der Drehfalle 1 als auch Bewegungen der Sperrklinke 2 jeweils dreidimensional erfasst. Grundsätzlich können hierzu aber auch mehrere Sensoreinheiten 4, 5 realisiert sein.

Die Sensoreinheit 4, 5 arbeitet insgesamt berührungslos und verfügt nach dem Ausführungsbeispiel über wenigstens ein Tastelement 4 und einen Sensor 5 bzw. 5a, 5b. Nach dem Ausführungsbeispiel sind mehrere Tastelemente 4 realisiert, nämlich zwei Tastelemente 4 an der Drehfalle 1 und ein weiteres drittes Tastelement 4 an respektive in der Sperrklinke 2. Bei den Tastelementen 4 handelt es sich im Ausführungsbeispiel jeweils um Permanentmagnete. Demgegenüber ist der Sensor 5 bzw. 5a, 5b vorliegend als 3D-Hallsensor ausgebildet.

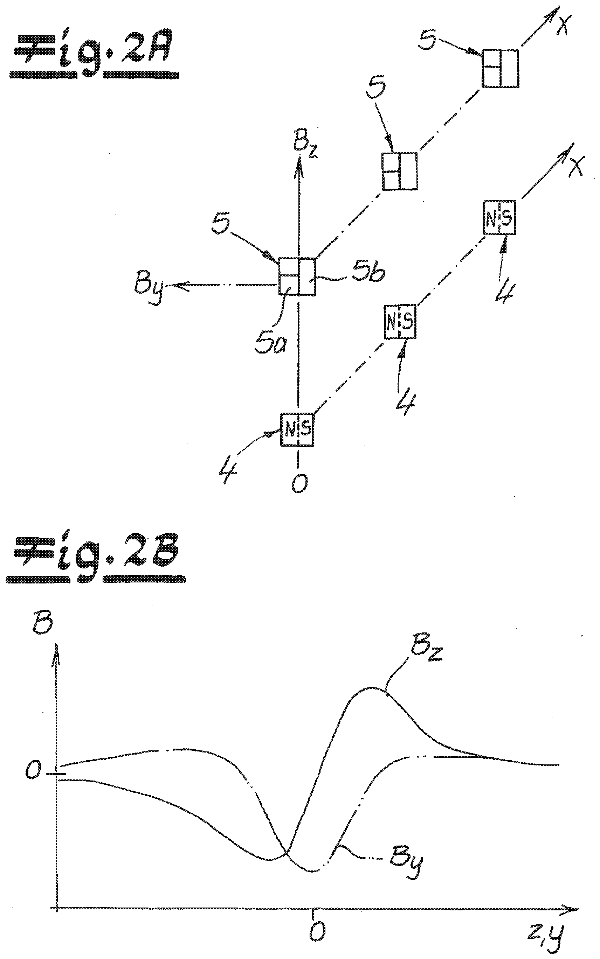

Man erkennt, dass der Sensor 5a, 5b zweiteilig mit einem lateralen Sensorelement 5a und zusätzlich einem vertikalen Sensorelement 5b ausgerüstet ist. Anhand der Figur 2A wird deutlich, dass mithilfe des lateralen bzw. seitlich erfassenden Sensorelementes 5a Bewegungen des zugehörigen Tastelementes bzw. der beiden Tastelemente 4 in respektive an der Drehfalle 1 in dort angedeuteter X-Richtung erfasst werden können. Die X-Richtung korrespondiert vorliegend und nicht einschränkend zur Fahrzeuglängsrichtung. Darüber hinaus ist das laterale Sensorelement 5a in der Lage, gegebenenfalls Bewegungen des betreffenden Tastelementes 4 zusätzlich in der Y-Richtung bzw. Fahrzeugquerrichtung aufzunehmen. Dazu können mehrere in der X-Richtung und gegebenenfalls in der Y-Richtung angeordnete Sensoren 5 vorgesehen sein, wie die Figur 2A andeutet.

Demgegenüber sorgt das vertikale Sensorelement 5b überwiegend dafür, dass mit seiner Hilfe die Bewegungen der fraglichen Tastelemente 4 an bzw. in der Drehfalle 1 zusätzlich in Z-Richtung bzw. Fahrzeughochachsenrichtung erfasst werden. Nach dem Ausführungsbeispiel ist das vertikale Sensorelement 5b zusätzlich dazu eingerichtet und in der Lage, Schwenkbewegungen der Sperrklinke 2 und des hieran angebrachten oder hierin eingebetteten zugehörigen Tasters 4 in eben dieser Z-Richtung zu sensieren.

Jedenfalls werden schematisch Signale für die magnetische Flussdichte B in der Z-Richtung Bz oder auch in der Y-Richtung B_{Y} beobachtet, wie sie in der Figur 2B prinzipiell angedeutet sind. Vergleichbare und nicht dargestellte Signale werden für die X-Richtung der Flussdichte B_{X} registriert. Diese Signale der einzelnen Sensoren 5 respektive deren Sensorelementen 5a, 5b können von einem nicht näher dargestellten Steuergerät aufgenommen und ausgewertet werden. Das Steuergerät wertet dabei die Signale des Sensors 5 nicht nur zur Positionsbestimmung des betreffenden Schließelementes 1,2 aus. Sondern hieraus können auch Geschwindigkeiten des betreffenden Schließelementes 1, 2 oder sogar seine Beschleunigung abgeleitet werden. Auch die Einhaltung etwaiger Schwellwerte oder Sollwerte bei der Bewegung des Schließelementes 1, 2 kann mithilfe des Steuergerätes einer Überprüfung unterzogen werden.

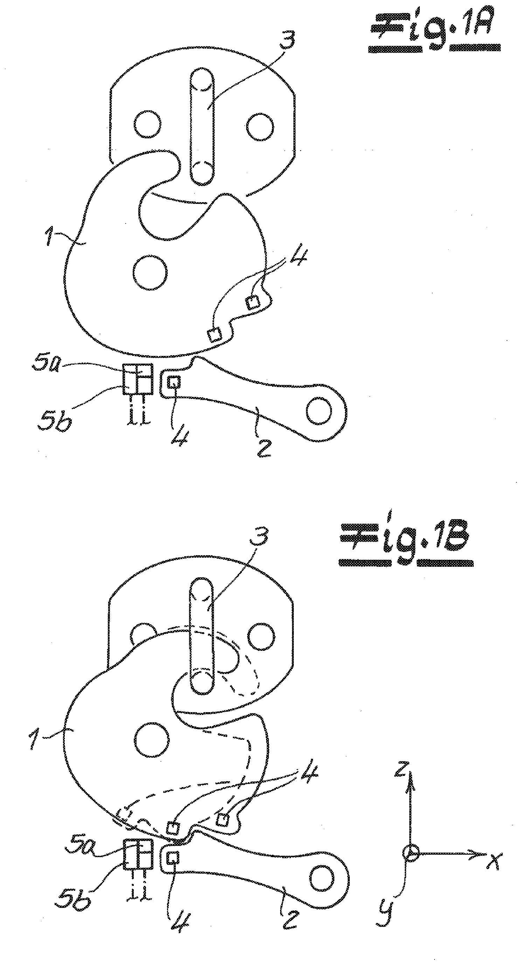

Dadurch kann das Steuergerät überprüfen, ob die Drehfalle 1 ausgehend von der geöffneten Stellung in der Figur 1A im Übergang zur Vorraststellung nach der Figur 1B beispielsweise einen vorgegebenen Weg eingehalten hat. Erst dann wird im Beispielfall ein Zuziehantrieb durch ein entsprechendes Signal des Steuergerätes beaufschlagt, um die Drehfalle 1 ausgehend von der Vorrastposition nach der Figur 1B in die Hauptrastposition zu überführen. Die Hauptrastposition ist in der Figur 1B gestrichelt dargestellt.

Der Zuziehvorgang ist dann erfolgreich absolviert worden, wenn im betrachteten Beispielfall die Drehfalle 1 einen Weg von 15 mm beim Übergang von der Vorrastposition in die Hauptrastposition absolviert hat. Sollte der mithilfe der Sensoreinheit 4, 5 erfasste und seitens des Steuergerätes ausgewertete Weg unter diesem Sollwert liegen, so deutet dies auf einen nicht vollständigen Schließvorgang hin. Als Folge hiervon wird beispielsweise ein Signal abgegeben, welches auf eine nicht einwandfrei erreichte Hauptrastposition hindeutet.

Darüber hinaus lassen sich durch eine solche umfassende Erfassung der Bewegung der Schließelemente 1, 2 auch beispielsweise Sicherheitseinrichtungen wie Airbags für den Fall ansteuern, dass die Drehfalle 1 im Beispielfall nicht ihre Hauptrastposition, sondern vielmehr Ihre Vorrastposition entsprechend der durchgezogenen Darstellung in der Figur 1B erreicht hat. Dadurch wird die Sicherheit enorm gesteigert, weil nun erfindungsgemäß die Möglichkeit besteht, im Betrieb und bei nicht erreichter Hauptrastposition der Drehfalle 1 dennoch für einen optimalen Schutz der Fahrzeugpassagiere zu sorgen.

### Bezugszeichenliste

- **1, 2**: **Schließelemente**
- **3**: **Schlosshalter**
- **4, 5**: **Sensoreinheit**

## Patentansprüche

1. Kraftfahrzeug-Schließeinrichtung, mit wenigstens einem Schließelement (1, 2), beispielsweise einer Drehfalle (1) und/oder einer Sperrklinke (2) als Bestandteile eines Kraftfahrzeug-Schlosses, und mit zumindest einer Bewegungen des Schließelementes (1, 2) erfassenden Sensoreinheit (4, 5),
**dadurch gekennzeichnet, dass**
die Sensoreinheit (4, 5) zur dreidimensionalen Erfassung der Bewegungen des Schließelementes (1, 2) eingerichtet ist.

2. Einrichtung nach Anspruch 1, **dadurch gekennzeichnet, dass** die Sensoreinheit (4, 5) berührungslos arbeitet.

3. Einrichtung nach Anspruch 1 oder 2, **dadurch gekennzeichnet, dass** die Sensoreinheit (4, 5) wenigstens ein Tastelement (4) und zumindest einen Sensor (5) aufweist.

4. Einrichtung nach Anspruch 3, **dadurch gekennzeichnet, dass** das Tastelement (4) und der Sensor (5) optisch arbeiten.

5. Einrichtung nach Anspruch 3, **dadurch gekennzeichnet, dass** das Tastelement (4) und der Sensor (5) induktiv arbeiten.

6. Einrichtung nach einem der Ansprüche 3 bis 5, **dadurch gekennzeichnet, dass** das Tastelement (4) an oder in dem Schließelement (1, 2) angebracht ist und/oder ganz oder teilweise mit dem Schließelement (1, 2) zusammenfällt.

7. Einrichtung nach einem der Ansprüche 3 bis 6, **dadurch gekennzeichnet, dass** der Sensor (5) wenigstens zweiteilig mit einem lateralen Sensorelement (5a) und einem vertikalen Sensorelement (5b) ausgerüstet ist.

8. Einrichtung nach einem der Ansprüche 3 bis 7, **dadurch gekennzeichnet, dass** der Sensor (5) gegebenenfalls zusammen mit weiteren elektronischen Bauelementen, auf einem Halbleiterchip angeordnet ist.

9. Einrichtung nach einem der Ansprüche 3 bis 8, **dadurch gekennzeichnet, dass** der Sensor (5) an ein seine Signale auswertendes Steuergerät angeschlossen ist.

10. Einrichtung nach Anspruch 9, **dadurch gekennzeichnet, dass** das Steuergerät die Signale des Sensors (5) nicht nur zur Positionsbestimmung, sondern auch zur Bestimmung der Geschwindigkeit, gegebenenfalls der Beschleunigung des Schließelementes (1, 2) sowie beispielsweise im Hinblick auf Sollwerte und Schwellwerte sowie deren Einhaltung auswertet.

## Claims

1. Motor vehicle closing device comprising at least one closing element (1, 2), for example a catch (1) and/or a pawl (2) as components of a motor vehicle latch, and comprising at least one sensor unit (4, 5), which detects movements of the closing element (1, 2),
**characterized in that**
the sensor unit (4, 5) is designed for three-dimensional detection of the movements of the closing element (1, 2).

2. Device according to claim 1, **characterized in that** the sensor unit (4, 5) functions contactlessly.

3. Device according to claim 1 or 2, **characterized in that** the sensor unit (4, 5) comprises at least one sensing element (4) and at least one sensor (5).

4. Device according to claim 3, **characterized in that** the sensing element (4) and the sensor (5) function optically.

5. Device according to claim 3, **characterized in that** the sensing element (4) and the sensor (5) function inductively.

6. Device according to any of claims 3 to 5, **characterized in that** the sensing element (4) is attached on or in the closing element (1, 2) and/or fully or partially coincides with the closing element (1, 2).

7. Device according to any of claims 3 to 6, **characterized in that** the sensor (5) is equipped at least in two parts with a lateral sensor element (5a) and a vertical sensor element (5b).

8. Device according to any of claims 3 to 7, **characterized in that** the sensor (5) is arranged on a semiconductor chip, optionally together with other electronic component parts.

9. Device according to any of claims 3 to 8, **characterized in that** the sensor (5) is connected to a control unit that evaluates the signals of said sensor.

10. Device according to claim 9, **characterized in that** the control unit evaluates the signals of the sensor (5) not only for position determination, but also to determine the speed, optionally the acceleration of the closing element (1, 2), and, for example, with regard to target values and threshold values and compliance therewith.

## Revendications

1. Dispositif de fermeture de véhicule automobile, comportant au moins un élément de fermeture (1, 2), par exemple un loquet rotatif (1) et/ou un cliquet de verrouillage (2) en tant que pièces d'une serrure de véhicule automobile, et comportant au moins une unité formant capteur (4, 5) détectant des mouvements de l'élément de fermeture (1, 2),
**caractérisé en ce que**
l'unité formant capteur (4, 5) est configurée pour la détection tridimensionnelle des mouvements de l'élément de fermeture (1, 2).

2. Dispositif selon la revendication 1, **caractérisé en ce que** l'unité formant capteur (4, 5) fonctionne sans contact.

3. Dispositif selon la revendication 1 ou 2, **caractérisé en ce que** l'unité formant capteur (4, 5) présente au moins un élément palpeur (4) et au moins un capteur (5).

4. Dispositif selon la revendication 3, **caractérisé en ce que** l'élément palpeur (4) et le capteur (5) fonctionnent de manière optique.

5. Dispositif selon la revendication 3, **caractérisé en ce que** l'élément palpeur (4) et le capteur (5) fonctionnent par induction.

6. Dispositif selon l'une des revendications 3 à 5, **caractérisé en ce que** l'élément palpeur (4) est monté sur ou dans l'élément de fermeture (1, 2) et/ou coïncide entièrement ou partiellement avec l'élément de fermeture (1, 2).

7. Dispositif selon l'une des revendications 3 à 6, **caractérisé en ce que** le capteur (5) est équipé d'au moins deux parties comportant un élément de capteur latéral (5a) et un élément de capteur vertical (5b).

8. Dispositif selon l'une des revendications 3 à 7, **caractérisé en ce que** le capteur (5) est disposé, éventuellement conjointement avec d'autres composants électroniques, sur une puce à semi-conducteur.

9. Dispositif selon l'une des revendications 3 à 8, **caractérisé en ce que** le capteur (5) est connecté à un appareil de commande analysant ses signaux.

10. Dispositif selon la revendication 9, **caractérisé en ce que** l'appareil de commande analyse les signaux du capteur (5) non seulement pour déterminer la position, mais aussi pour déterminer la vitesse, éventuellement l'accélération, de l'élément de fermeture (1, 2) et, par exemple, en ce qui concerne des valeurs de consigne et des valeurs seuils ainsi que leur respect.
